Europäisches Patentamt

(19) **European Patent Office**

**Office européen des brevets**

(11) Publication number: **0 248 535**

**A2**

(12) # EUROPEAN PATENT APPLICATION

(21) Application number: **87303999.4**

(22) Date of filing: **05.05.87**

(51) Int. Cl.³: **G 01 F 15/04**
**F 02 D 41/00, G 01 F 15/06**

(30) Priority: **06.05.86 JP 104412/86**

(43) Date of publication of application:
**09.12.87 Bulletin 87/50**

(84) Designated Contracting States:
**DE GB**

(71) Applicant: **FUJI JUKOGYO KABUSHIKI KAISHA**
**7-2 Nishishinjuku 1-chome Shinjuku-ku**
**Tokyo(JP)**

(72) Inventor: **Sogawa, Yoshiyuki**
**3821, Jindaiji**
**Mitaka-shi Tokyo(JP)**

(74) Representative: **Kirk, Geoffrey Thomas et al,**
**BATCHELLOR, KIRK & EYLES 2 Pear Tree Court**
**Farringdon Road**
**London EC1R 0DS(GB)**

(54) System for measuring the quantity of intake air in an engine.

(57) A system for measuring quantity of intake air in an engine has an airflow meter provided in an intake passage upstream of a throttle valve for measuring the quantity of intake air. Quantity of intake air entered into a space between the throttle valve and cylinders of the engine without entering into the cylinders is calculated. The difference between the quantity of intake air measured by the airflow meter and the quantity entered in the space is calculated to provide the quantity of intake air actually entering into the cylinders.

EP 0 248 535 A2

./...

Croydon Printing Company Ltd.

FIG. 3

# SYSTEM FOR MEASURING THE QUANTITY

# OF INTAKE AIR IN AN ENGINE

The present invention relates to a system for measuring the quantity of intake air in an internal combustion engine for a motor vehicle, in order to determine the fuel injection time and the ignition timing.

In a known fuel injection system, an airflow meter is provided in an intake passage at a position upstream of a throttle valve to detect the quantity of intake air (Q). The fuel injection time $T_p$ is determined by a calculation of $T_p = Q/N$ (N is engine speed).

Further, the ignition timing is also determined by using the quantity Q of intake air. Accordingly, a high degree of accuracy is required in measuring the quantity of intake air. However, in the prior art, it is difficult to accurately measure the quantity of intake air for the reason described hereinafter.

Since the airflow meter is positioned upstream of the throttle valve, the intake air induced into a cylinder of the engine is not directly measured. Namely, there is a space between the throttle valve and the cylinder, such as a chamber formed downstream of the throttle valve and an inlet manifold. Accordingly, when the throttle valve is rapidly opened, the induced air enters into the space to increase the pressure in the space. In other words, an amount of air sufficient to increase the pressure in the space is included in the air induced through the throttle valve. The airflow meter measures the quantity of the intake air including that air which is not induced into the cylinder. Accordingly, the measured quantity is temporarily increased. If the injection time is calculated based on the increased quantity of intake air, the fuel injector supplies a larger quantity of fuel than is required, thereby enriching the air-fuel mixture. The enrichment of the mixture causes a reduction in the output of the engine and increases noxious emissions, such as CO and HC. Further, if the ignition timing is calculated based on the increased quantity of the intake air, the timing deviates from a desired timing.

Similarly, when the throttle valve is closed, the air-fuel ratio and ignition timing deviate from desired values.

An object of the present invention is to provide a system which measures the quantity of air taken into the cylinder with greater accuracy.

According to the present invention, in a system for measuring the quantity of intake air in an engine for a motor vehicle, the engine has an intake passage, a throttle valve located in the intake passage to divide the passage into a first intake passage upstream of the throttle valve and a second intake passage between the throttle valve and the cylinders of the engine;   and an airflow meter provided in the first intake passage for measuring a first quantity of intake air flowing through the first intake passage; characterised in that there is provided first means for determining a second quantity of intake air entering into the second intake passage without entering into the cylinders;   and second means for producing a signal representing the quantity of intake air actually entering into the cylinders being the difference between the first quantity and the second quantity.

In an aspect of the invention, the first means comprises third means for calculating pressure in the second intake passage, and fourth means for calculating the second quantity based on the pressure.

In order that the invention may be more readily understood, it will now be described, by way of example only, with reference to the accompanying drawings, in which:-

Figure 1 is a schematic diagram showing a system according to the present invention;

Figure 2 is a schematic view of an intake system;

Figure 3 is a block diagram showing an embodiment of the present invention;

Figure 4 is a flowchart showing the operation of the system of Figure 3; and

Figures 5a to 5g are graphs showing variations of various values.

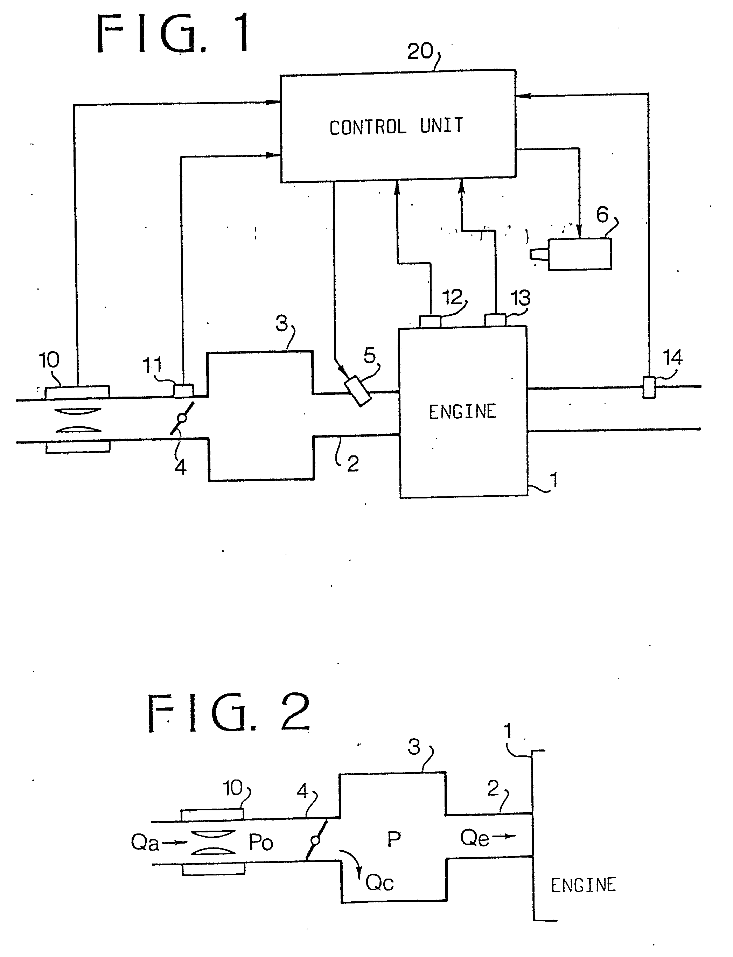

Referring to Figure 1, in an intake passage 2 of an engine 1, a throttle chamber 3 is provided downstream of a throttle valve 4 so as to absorb pulsations of incoming air. An airflow meter 10 based on the hot wire principle is provided upstream of the throttle valve 4 and multiple fuel injectors 5 are provided in the intake passage at positions adjacent the inlet valves so as to supply fuel to each cylinder of the engine 1. A throttle position sensor 11, coolant temperature sensor 12, crank angle sensor 13 and $O_2$-sensor 14 are provided for detecting these conditions and output signals from the sensors are applied to a control unit 20 comprising a microcomputer to operate the fuel injectors 5 and an ignition coil 6. The control unit 20 makes a computation of a basic fuel injection time $Tp = Q/N$ and the basic fuel injection time is corrected by a coolant temperature signal from the sensor 12, and a feedback signal from the $O_2$-

sensor 14.

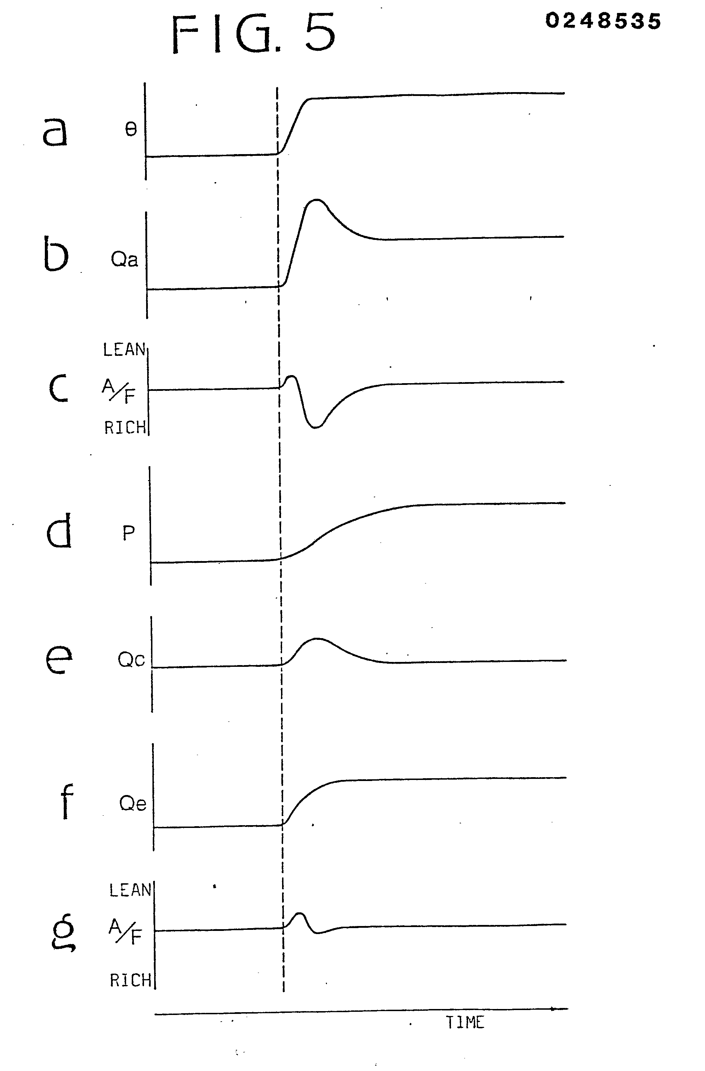

The principle by which the quantity of intake air is measured according to the present invention is described with reference to Figures 2 and 5. When the throttle valve 4 is opened rapidly (Figure 5a), the quantity Qa measured by the airflow meter 10 increases rapidly and overshoots, as shown in Figure 5b. Figure 5c shows the variation of air-fuel ratio in the prior art system where the air-fuel ratio becomes small (rich mixture). The control unit 20 of the present invention operates to estimate the quantity of air Qe induced in a cylinder of the engine 1 by calculating the quantity Qc of air entered into the chamber 3 and intake passage 2 to increase the pressure therein, as described hereinafter.

The quantity Qa of intake air passing through the throttle valve 4 can be obtained by using the Bernouli theorem, as follows:

$$Qa = C \times A(\theta) \times \sqrt{Po - P}$$

where C is a constant, $A(\theta)$ is a function determined by the opening degree $\theta$ of the throttle valve 4, Po is the pressure in the intake passage 2 upstream of the throttle valve 4, and P is the pressure in the throttle chamber 3.

Therefore,

$$P = Po - B(\theta) \times Qa^2$$

where     $B(\theta) = 1 / [C^2 ( A(\theta) )^2]$

The $B(\theta)$ is a function of throttle opening degree $\theta$ and Po and C are coefficients and this data is stored in memories so as to be used in the calculation of the pressure P.

The quantity Qc which increases the pressure P can be calculated by using the differentiation of the pressure P with respect to time (dp/dt) as follows:

Qc = dp/dt x C (C = constant)

Accordingly, the necessary quantity Qe is Qe = Qa - Qc.

Thus, the necessary fuel injection time Tp is calculated based on the quantity Qe. Figures 5d to 5f show variations of pressure P and quantities Qc and Qe, and Figure 5g shows an improved air-fuel ratio.

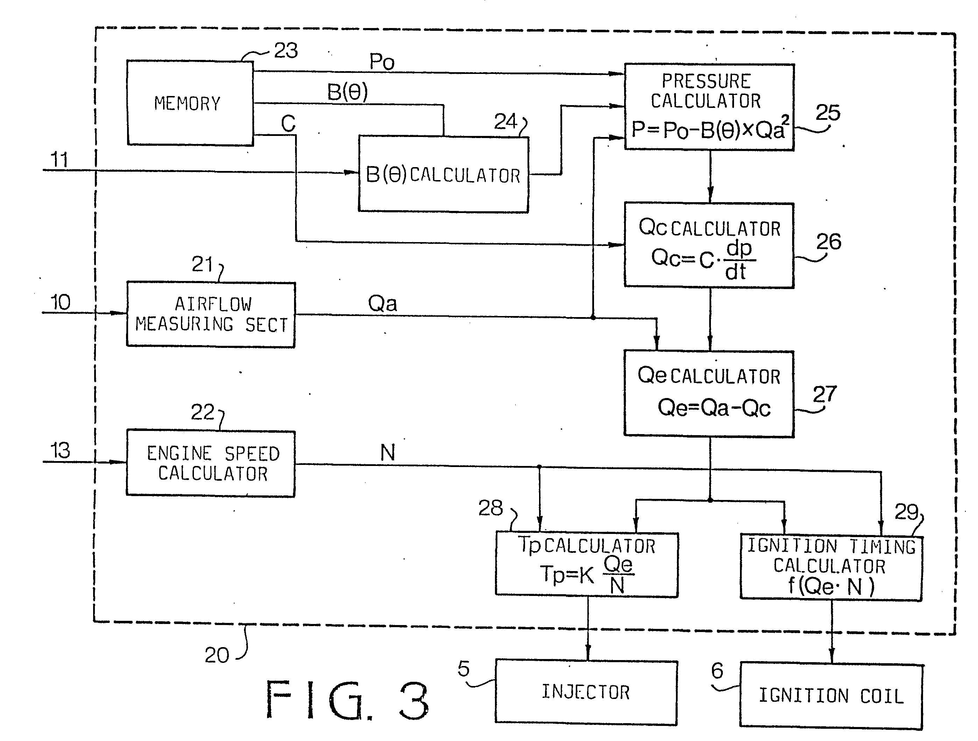

Referring to Figure 3 showing the control unit 20 as an embodiment of the invention, the control unit is provided with an airflow measuring section 21 for producing the quantity Qa from the output signal of the airflow meter 10, an engine speed calculator 22 for calculating engine speed N based on the output signal of the crank angle sensor 13, and a $B(\theta)$ calculator 24 for calculating the function $B(\theta)$ based on the output signal $\theta$ of the throttle position sensor 11 and a signal derived from a memory 23. A pressure calculator 25 is provided to make the calculation of

$P = Po - B(\theta) \times Qa^2$ based on output signals Po, B($\theta$), Qa of memory 23, calculator 24 and section 21. A Qc calculator 26 is provided to calculate the quantity Qc in response to output signals C, P of memory 23 and pressure calculator 25, and to produce an output signal Qc. A Qe calculator 27 is provided to calculate the quantity Qe in response to output signals Qa of airflow measuring section 21 and Qc from calculator 26. The fuel injection time Tp is calculated at Tp calculator 28 and the ignition timing is calculated at an ignition timing calculator 29 in response to output signal N and Qe from calculator 27. The output signal of the Tp calculator 28 is applied to injectors 5 and the output signal of the ignition timing calculator 29 is applied to ignition coil 6.

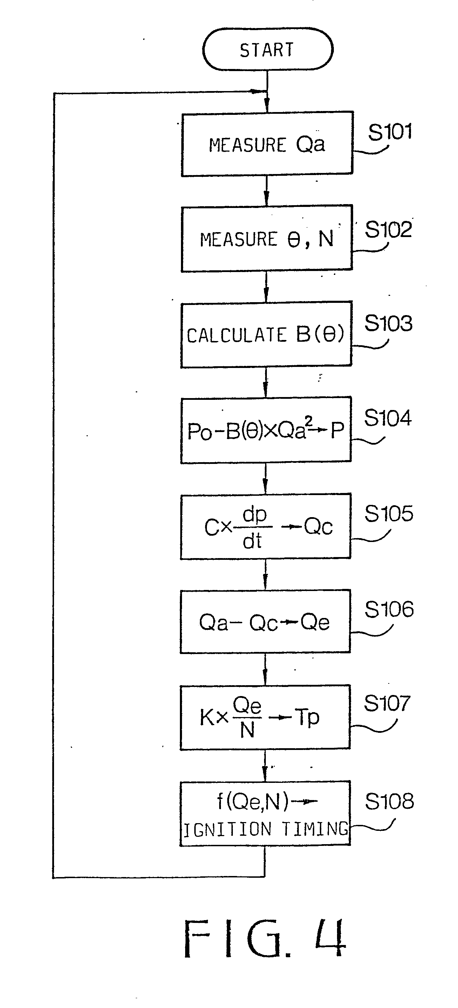

The operation of the system is described hereinafter with reference to Figures 3 and 4. The quantity Qa is measured at the airflow measuring section 21 based on the input from the airflow meter 10 (step S101). The throttle opening degree $\theta$ is obtained from the output signal of throttle position sensor 11, and engine speed N is calculated at calculator 22 based on the output signal of crank angle sensor 13 (step S101). The function B($\theta$) is calculated at the B($\theta$) calculator 24 based on a data derived from the memory 23 in accordance with the throttle opening degree $\theta$

(step S103). The pressure calculator 25 makes the calculation of $P = Po - B(\theta) \times Qa^2$ based on output signals of memory 23, calculator 24 and section 21 (step S104). The pressure P and the constant C stored in the memory 23 are applied to the Qc calculator 26 to make the calculation $Qc = C \times dp/dt$ (step S105). The quantity Qe is calculated at Qe calculator 27 by the calculation Qa - Qc (step S106). The fuel injection time Tp is calculated at Tp calculator 28 by the calculation of $Tp = K \times Qe/N$ (step S107). Further, the ignition timing is calculated at ignition timing calculator 29 (step S108). The output signal of the Tp calculator 28 is applied to the injectors 5 to inject the fuel for correct periods of time. The output signal of the ignition timing calculator 29 is applied to ignition coil 6 to ignite the fuel at correct times.

Although the above description is with reference to the operation when the throttle valve is opened, the operation for closing the throttle valve is similar to the above-described operation, thereby preventing the deviation of air-fuel ratio from increasing.

The quantity of intake air entered into spaces other than the cylinders of the engine is calculated based on the pressure in the spaces. Accordingly, the actual quantity induced into the cylinders can be accurately measured.

While the presently referred embodiment of the present invention has been shown and described, it is to be understood that this disclosure is for the purpose of illustration and that various changes and modifications may be made without departing from the scope of the invention as set forth in the appended claims.

Claims:

1.      A system for measuring the quantity of intake air in an engine for a motor vehicle, the engine (1) having an intake passage (2), a throttle valve (4) located in the intake passage to divide the passage into a first intake passage upstream of the throttle valve and a second intake passage between the throttle valve and the cylinders of the engine;  and an airflow meter (10) provided in the first intake passage for measuring a first quantity (Qa) of intake air flowing through the first intake passage;  characterised in that there is provided first means (20, 24) for determining a second quantity (Qc) of intake air entering into the second intake passage without entering into the cylinders;  and second means for producing a signal representing the quantity of intake air (Qe) actually entering into the cylinders being the difference between the first quantity and the second quantity.

2.      The system according to claim 1, characterised in that the first means comprises third means for calculating pressure in the second intake passage, and fourth means for calculating the second quantity based on the pressure.

3.       The system according to claim 2,
characterised in that the third means calculates the
pressure based on pressure in the first intake passage,
the first quantity, and the degree of opening of the
throttle valve.

# FIG. 1

# FIG. 2

FIG. 3

INJECTOR

IGNITION COIL

0248535

```
                    ┌─────────┐
                    │  START  │
                    └─────────┘
                         │
        ┌────────────────┤
        │                ▼
        │      ┌──────────────────┐
        │      │   MEASURE Qa     │  S101
        │      └──────────────────┘
        │                │
        │                ▼
        │      ┌──────────────────┐
        │      │  MEASURE θ, N    │  S102
        │      └──────────────────┘
        │                │
        │                ▼
        │      ┌──────────────────┐
        │      │  CALCULATE B(θ)  │  S103
        │      └──────────────────┘
        │                │
        │                ▼
        │      ┌──────────────────┐
        │      │  Po−B(θ)×Qa²→P   │  S104
        │      └──────────────────┘
        │                │
        │                ▼
        │      ┌──────────────────┐
        │      │  C×dp/dt →Qc     │  S105
        │      └──────────────────┘
        │                │
        │                ▼
        │      ┌──────────────────┐
        │      │  Qa− Qc→Qe       │  S106
        │      └──────────────────┘
        │                │
        │                ▼
        │      ┌──────────────────┐
        │      │  K×Qe/N →Tp      │  S107
        │      └──────────────────┘
        │                │
        │                ▼
        │      ┌──────────────────┐
        │      │  f(Qe,N)→        │  S108
        │      │  IGNITION TIMING │
        │      └──────────────────┘
        │                │
        └────────────────┘
```

S101 MEASURE Qa

S102 MEASURE $\theta$, N

S103 CALCULATE B($\theta$)

S104 $Po - B(\theta) \times Qa^2 \to P$

S105 $C \times \dfrac{dp}{dt} \to Qc$

S106 $Qa - Qc \to Qe$

S107 $K \times \dfrac{Qe}{N} \to Tp$

S108 $f(Qe, N) \to$ IGNITION TIMING

# FIG. 4

# FIG. 5

a — θ

b — Qa

c — LEAN / A/F / RICH

d — P

e — Qc

f — Qe

g — LEAN / A/F / RICH

TIME